(19) **Europäisches Patentamt**

**European Patent Office**

**Office européen des brevets**

(11) **EP 0 888 681 B1**

(12) **EUROPEAN PATENT SPECIFICATION**

(45) Date of publication and mention
of the grant of the patent:
**28.05.2003 Bulletin 2003/22**

(21) Application number: **97914988.7**

(22) Date of filing: **13.03.1997**

(51) Int Cl.[7]: **H04L 25/03**, H04B 1/707

(86) International application number:
**PCT/US97/03803**

(87) International publication number:
**WO 97/035411 (25.09.1997 Gazette 1997/41)**

(54) **BALANCED TRANSVERSAL I,Q FILTERS FOR QUADRATURE MODULATORS**

SYMMETRISCHE TRANSVERSALE I/Q-FILTER FÜR QUADRATURMODULATOREN

FILTRES TRANSVERSAUX I ET Q EQUILIBRES POUR MODULATEURS D'AMPLITUDE EN QUADRATURE

(84) Designated Contracting States:
**DE FI FR GB SE**

(30) Priority: **20.03.1996 US 620843**

(43) Date of publication of application:
**07.01.1999 Bulletin 1999/01**

(73) Proprietor: **Ericsson Inc.**
**Research Triangle Park, N.C. 27709 (US)**

(72) Inventor: **DENT, Paul, W.**
**Pittsboro, NC 27709 (US)**

(74) Representative:
**O'Connell, David Christopher et al**
**Haseltine Lake**
**Imperial House**
**15-19 Kingsway**
**London WC2B 6UD (GB)**

(56) References cited:
**WO-A-93/14588**          **WO-A-96/08865**

- **IEEE JOURNAL OF SOLID-STATE CIRCUITS, vol. 28, no. 3, March 1993, NEW YORK US, pages 253-260, XP000363924 HINDERLING ET AL.: "CDMA mobile station modem ASIC"**
- **PROCEEDINGS OF THE CUSTOM INTEGRATED CIRCUITS CONFERENCE, 1 - 4 May 1995, NEW YORK, US, pages 315-318, XP000536815 YASUDA ET AL.: "A small-size adder-free pi/4-shift QPSK signal generator"**
- **PROCEEDINGS OF THE MILITARY COMMUNICATIONS CONFERENCE, 2 - 5 October 1994, NEW YORK, US, pages 633-638, XP000505950 HARRIS: "Implementing waveform shaping filters to pre-equalize gain and phase distortion of the analog signal processing path is DSP based modems"**
- **RF DESIGN, vol. 18, no. 6, 1 June 1995, US, pages 26-34, XP000513598 HONGYING YAN ET AL.: "DSP implementation of GFSK, GMSK, AND FQPSK modulated wireless systems"**

## Description

Background of the Invention

1) Field of the Invention.

The invention relates to methods and apparatuses for the realization of spectral containment of radio transmissions so that they do not cause adjacent channel interference and, in particular, for the realization of spectral containment of high bitrate digital transmissions such as TDMA or CDMA cellular telephone signals.

2) Discussion of Related Art.

Technological advancements have permitted continuous improvements in reducing the size and cost while increasing the battery life of cellular portable telephones. This has made cellular telephones ever more popular. As a result, cellular telephone systems need to expand so as to provide service to ever greater numbers of subscribers.

Pressure on frequency channel availability has led to the development of digital cellular technologies such as the European GSM TDMA system, the U.S. IS-54 digital TDMA cellular standard, and the U.S. IS-95 CDMA standard. All the above systems are characterized by first converting speech to a compressed digital form which is then coded by more or less redundant coding and subsequently transmitted using one or more timeslots in a repeating frame period.

For example, the GSM TDMA system codes speech using convolutional coding and transmits the coded speech using one or two out of 16 timeslots depending on whether a half-rate or a full-rate channel is allocated. An IS-54 system also convolutionally codes speech and then transmits it using one or two out of six timeslots. An IS-95 system uses convolutional coding plus bit repetition and transmits the speech using 2, 4, 8 or 16 out of 16 timeslots depending on whether the speech sound is a voiced sound, non-voiced sound or silence/background noise. In all cases therefore, the bitrate of speech is first compressed to remove natural redundancy and then the bitrate is increased by using intelligent coding to obtain a higher bitrate stream for transmission that is more tolerant of interference.

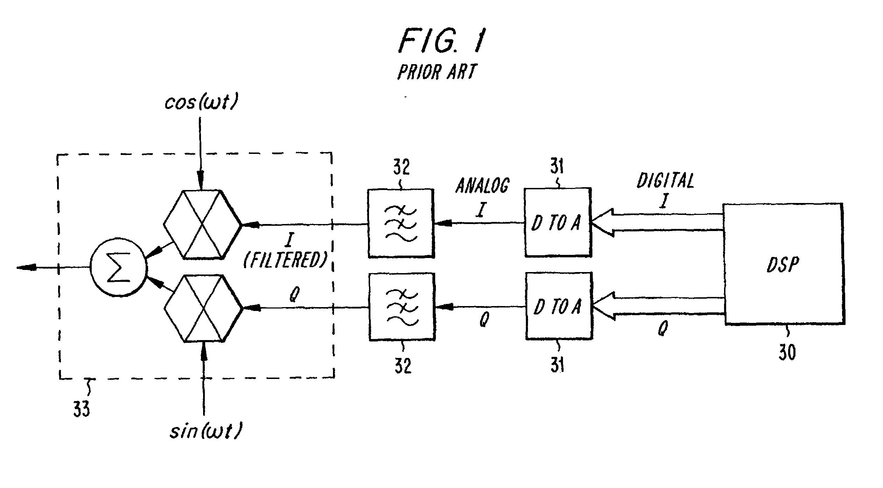

A transmitter for such digitally coded signals preferably comprises a balanced quadrature modulator. Figure 1 illustrates a prior art arrangement of a quadrature modulator for synthesizing an arbitrarily modulated signal. A digital signal processor (DSP) 30 calculates time-spaced samples of the real and imaginary parts of a desired complex modulation. The real part is given by the desired amplitude times the cosine of the desired phase angle, while the imaginary part is given by the amplitude times the sine of the phase angle. In this way both Amplitude Modulated (AM) signals or Phase Modulated (PM) signals can be generated, or signals comprising both, the result of which is generally known as complex modulated signals. The numerical samples calculated by the DSP 30 are transferred to a pair of Digital-to-Analog (D-to-A) convertors 31 that convert each numerical sample pair into a pair of analog voltages known as I (In-phase) and Q (Quadrature) signals. A sequence of such numerical samples generates I and Q waveforms but in a stepwise fashion.

The steps in the waveforms cause undesirable spectral components that would interfere with adjacent radio channels unless suppressed. Some techniques for D-to-A conversion provide interpolation between samples giving sloping waveforms between adjacent sample values, which reduces but does not sufficiently eliminate the undesired components. Consequently, I and Q smoothing filters 32 are necessary. These are low-pass filters that pass all modulation spectral components of interest but suppress the higher frequency components of the spectrum associated with the stepwise or piecewise linear I,Q waveforms from the D-to-A convertors 31.

The smoothed I,Q waveforms are applied to a pair of balanced modulators 33 together with cosine and sine carrier frequency signals, this arrangement being known as a quadrature modulator. The arrangement described so far and illustrated in Figure 1 belongs to the well-known prior art.

In summary, the DSP 30 produces numerical I and Q waveforms representative of the desired digital or analog modulation and then D-to-A convertors 31 convert the numerical I,Q representations to analog I,Q modulating waveforms. Filters 32 remove discontinuities due to the finite time sampling and quantization of the numerical I,Q signals to produce continuous I,Q waveforms, thus avoiding spectral splatter into adjacent radio channels. The smoothed I,Q waveforms are applied to sine and cosine radio frequency-carriers using quadrature modulator 33.

It is important for accurate signal generation that (1) the two balanced modulators are accurately matched, (2) the levels of the I and Q signals are accurately controlled relative to each other, and (3) the balanced modulators have low carrier leakage or offset, that is, the output signal of a balanced modulator should be zero when its respective I or Q modulating signal is zero.

Since the I and Q signals vary from positive to negative, if a circuit is required to operate only from a single positive supply, then the zero point of an I or Q waveform cannot be defined to be zero voltage, but must be defined to be some positive reference voltage such as half the supply voltage. Then when an I or Q waveform swings below this reference voltage it will be interpreted as negative, and positive when it swings above.

Unfortunately, it is difficult to generate a reference voltage from the DSP 30 that is exactly equal to the voltage the D-to-A convertors supply with an input numerical value of zero. This problem is overcome by use of the balanced configuration shown in Figure 2 and disclosed in U.S. Patent No. 5,530,722 which uses special D-to-A conversion techniques to generate I and Q signals as well as their complements $\bar{I}$ and $\bar{Q}$.

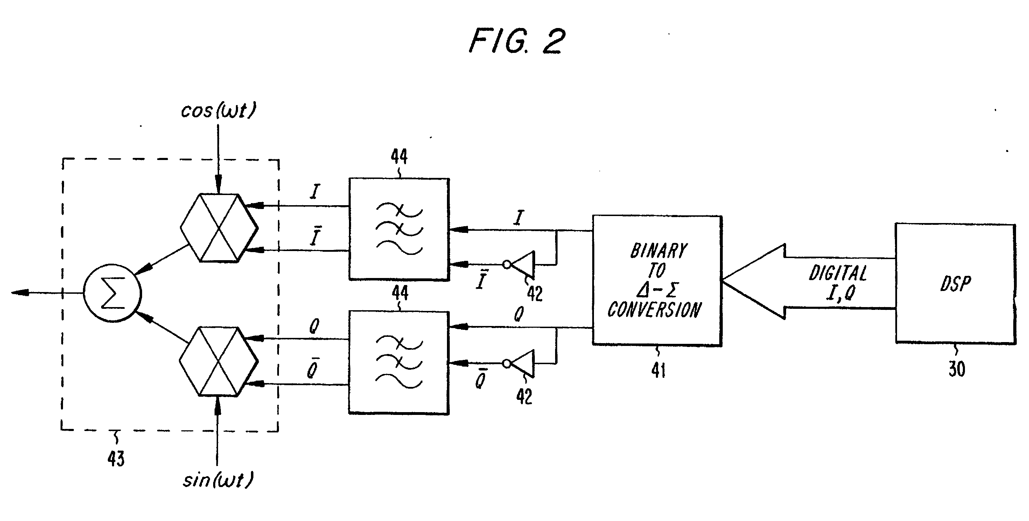

In Figure 2, instead of using the D-to-A convertors 31 of Figure 1, the numerical I and Q signals from DSP 30 are transferred to a delta-sigma ($\Delta$-$\Sigma$) convertor 41. This device is built according to known art to generate a high bitrate stream of binary '1's and '0's having a short-term average value proportional to the numerical input value. With a maximum possible numerical input value the bit stream produced would be 11111... (the voltage of a '1' condition being equal to the chosen supply voltage) while the minimum numerical input value will generate the bit pattern 00000.... A half-scale numerical input will produce the bit stream 1010101010... having an average voltage equal to half the supply voltage. According to an aspect of the invention disclosed in U.S. Patent No. 5,530,722, extra invertor gates 42 are provided at the output of each delta-sigma convertor 41 to additionally generate the complementary bitstreams. That means when delta-sigma convertors 41 produce a bit stream 100100100100... having a mean of 1/3 the supply voltage, the complementary bit stream will be 011011011011... having a mean of 2/3rds the supply voltage. The difference between those two is 1/3-2/3 = -1/3 of the supply voltage. If the convertor produces 111011101110... having a mean of +3/4 of the supply voltage then the complementary signal 000100010001... will have the mean of 1/4 of the supply voltage, so that the difference is 3/4-1/4 = +1/2 of the supply voltage. Consequently, by using the difference between the convertor output signal and its complement to represent an I or Q signal, the value represented can be positive or negative even with a single positive voltage supply, and no reference voltage need be generated. The balanced mixers 43 are therefor provided with balanced, two-wire inputs rather than single-ended inputs, that are responsive to the difference in the signals on the two wires and unresponsive to the absolute or common-mode voltage (sum of the voltages) on the two wires.

High bitrate delta-sigma modulation bitstreams are simply converted to the analog voltage they represent by forming the moving average voltage over a large number of bits. This may be done using a continuous-time, low-pass filter having a bandwidth which is a small fraction of the bitrate, but still sufficient to pass all desired modulation components. For the balanced signal configuration developed in this invention, balanced filters 44 are interposed between the delta-sigma convertor outputs and the I,Q balanced modulators 43.

In summary, delta-sigma convertors 41 convert the numerical sample values from DSP 30 to high bitrate streams wherein instantaneous waveform values are represented by the proportion of ones to zeros in the bitstream, i.e., by the average mark/space ratio. The inverters 42 form complementary bitstreams such that the difference in mark space ratio forms a balanced signal that can more easily represent both positive and negative instantaneous waveform values. The high bitrate fluctuations are removed by balanced filters 44 to obtain continuous, smoothed I,Q waveforms which are applied to balanced inputs of quadrature modulator 43, as disclosed in U.S. Patent No. 5,530,722. This patent discloses the advantages of using balanced I,Q signals representing a complex modulating signal waveform by means of high bitrate sigma-delta modulation streams and their complements.

Figure 1 of WO 93/14588 shows a conventional D-to-A converter and anti aliasing filters. It does not disclose that a quadrature modulator can be driven with balanced signals. Jurg Hinderling et al., "CDMA Mobile Station Modem ASIC," 8107 IEEE J. of Solid-State Circuits 28 (March 1993), No. 3, pages 253-260 shows a D-to-A converter connected to a transmitter filter indicating that the transmit filter has a numerical output rather than an analyze waveform. See second column on page 256. Akira Yasuda et al., "A Small-Size Adder-Free Tr/4-Shift QPSK Signal Generater," IEEE 1995 Custom Integrated Circuits Conference, January 1995, pages 315-318, discloses a QPSK signal generator using a serial-to-parallel converter using a $\Delta$-$\Sigma$ modulation technique to reduce die size by avoiding the use of digital adders.

Summary of the Invention

The present application discloses the use of the inventive schemes for CDMA transmissions and discloses an advantageous balanced filter that may be constructed on a digital integrated circuit.

A signal to be transmitted is formed initially as a pair of complex baseband signals comprising an I-signal and a Q-signal. The I and Q signals can be represented by high bitrate sigma-delta modulation in which each bit is either a zero or a one. An I stream, a Q stream and their complements are preferably used to form a balanced I signal and a balanced Q signal each on a pair of wires. A CDMA signal can likewise be represented by a stream of high bitrate I-chips and a stream of high bitrate Q-chips, and their complements. The CDMA I and Q signals may furthermore be sampled at a multiple of, e.g., four times, the chiprate giving four bits per chip of balanced I and balanced Q signals.

The balanced I and Q signals are delayed in a chain of shift register stages clocked at at least the bitrate to produce delayed balanced I,Q signals at respective q and q outputs of each of the shift register stages.

A first resistor network comprising resistors of different values representing transversal filter weights is connected to the I outputs of the shift register, the q outputs being used for a positive weight and the $\bar{q}$ outputs for a negative weight. Each shift register output connects to one end of a respective weighting resistor while the other resistor ends are summed to provide a first filtered output. A second identical resistor network connects to the q and $\bar{q}$ outputs not used by the first network to provide a complementary output. Identical first and second resistor networks are likewise connected to the q and $\bar{q}$ outputs of the Q shift register to provide complementary filtered Q outputs.

The balanced I and Q filtered outputs can be further connected to a balanced resistor-capacitor filter to remove unwanted high-frequency components. The RC-filtered balanced signals are then connected to an I,Q modulator (quadrature modulator) to modulate a radio frequency signal such that unwanted emissions in adjacent channels are reduced.

The inventive balanced I,Q transversal filter may be constructed entirely on a semiconductor substrate as an integrated circuit. The desired filtering function is determined by resistor ratios and not absolute values making it suitable for production in processes where absolute resistor values are not able to be tightly controlled but resistor ratios are determined by geometry and thus are more tightly controlled.

Brief Description of the Drawings

The invention will now be described with reference to the exemplary embodiments shown in the accompanying drawings in which:

Figure 1 is a schematic diagram of a conventional art I,Q modulator circuit;
Figure 2 is a schematic diagram of an inventive I,Q modulator circuit as disclosed herein and in U.S. Patent No. 5,530,722;
Figure 3 is a schematic diagram of an I,Q filtering circuit in accordance with the present invention; and
Figure 4 is a schematic diagram of an I,Q filtering circuit in accordance with the present invention as applied to CDMA transmission.

Detailed Description of Embodiments of the Present Invention

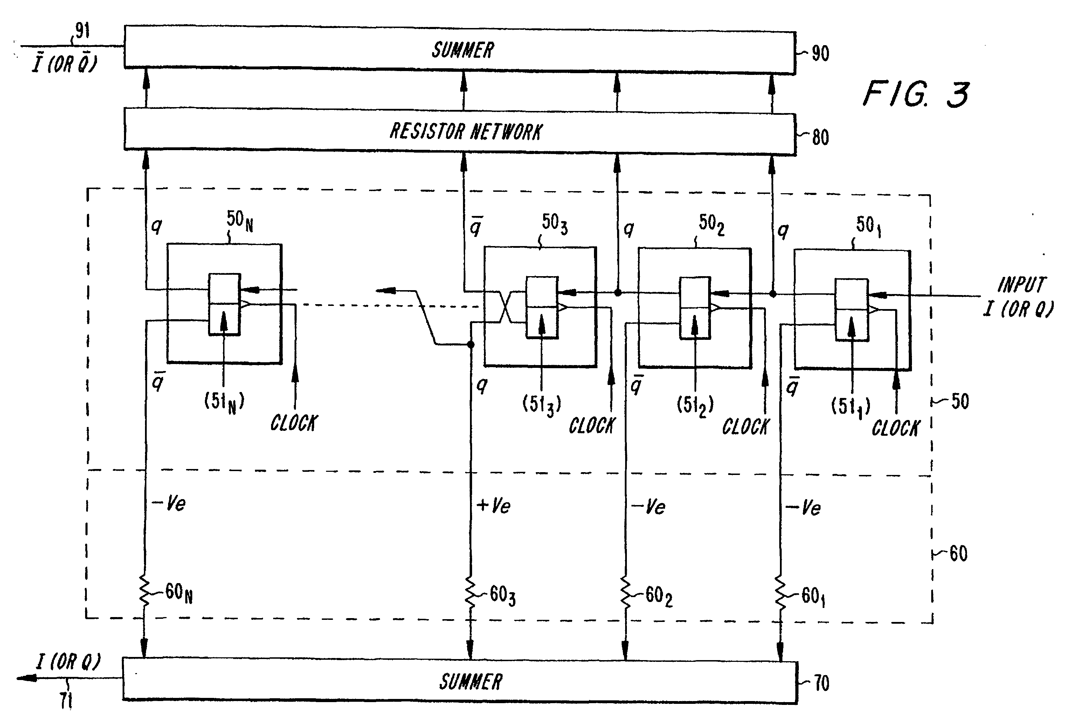

Figure 3 shows an inventive alternative to the combination of the inverters 42 and the balanced filters 44 of Figure 2 for realizing a balanced filter.

An I bitstream or a Q bitstream from delta-sigma convertors 41 is applied to a filter 44 of Figure 2 constructed broadly according to Figure 3, i.e., there is one filter 44 for each of the I and Q bitstreams. In other words, one of the balanced transversal filters of Figure 3 is used for the I-signals, and another one for the Q-signals.

The I or Q bitstream enters a shift register 50 which is in the form of a chain of shift register stages ($50_1$, $50_2$,.... $50_N$) each comprising a flip-flop ($51_1$, $51_2$,... $51_N$) having q and $\bar{q}$ complementary outputs. A resistor network 60 consisting of a group of resistors ($60_1$, $60_2$... $60_N$) of different values $R_1$, $R_2$,... $R_N$ are connected to the flip-flop outputs using the q output to obtain a positive weighting value or the $\bar{q}$ output, as shown at shift register stage $50_3$, if a negative weighting value is desired. How the weights are determined is explained below. The other ends of the resistors are connected to a summer 70 which may be simply a summing junction 71. An identical set of resistors 80 connects to the flip flop q-outputs where the first network connects to the $\bar{q}$ outputs and vice-versa, such that the waveform produced at the summer 90 or summing junction 91 of the second resistor network 80 is complementary to the first waveform at the summer 70 or summing junction 71 of the first resistor network 60.

In a system following the current GSM standard, a 13MHz reference clock is used as the reference for all bitrates and frequencies. The transmitted bitrate is 13MHz/48. Using 13MHz as the delta-sigma bitrate output from delta-sigma convertors 41 means that 48 delta-sigma bit outputs will occur per transmitted bit period. Shift register 50 can thus conveniently be 48 bits long and the resistors $60_1$-$60_{48}$ ("N" in this instance being equal to 48) chosen to obtain a desired impulse response with a duration of one bit period. This impulse response corresponds to a frequency response bandwidth of the order of the bitrate or a few times the bitrate. This frequency response represents only the filtering needed to remove delta-sigma noise, the waveform shaping of the transmitted symbol transitions being determined by the DSP 30 in conjunction with the delta-sigma convertor 41. For example, the delta-sigma convertor 41 can comprise a Read Only Memory (ROM) containing 8 precomputed 48-bit patterns of I and Q waveforms corresponding to all possible patterns of three consecutive information bits.

Generally, I,Q waveforms can be created for digital transmitters by means of such a ROM modulator, which relies on being able to truncate the impulse response of the premodulation filter to a reasonable number of bit periods M, where $2^M$ gives a ROM of a reasonable size. Using the truncated impulse response, the filter can produce, over each bit interval, one of a finite number, $2^M$, of possible waveforms. By storing each I,Q waveform at an adequate number of samples per bit in a ROM, the modulation and filtering is achieved simply by feeding the data stream through an M-bit shift register (not shown) which addresses the ROM to output waveforms for that bit interval. Each waveform then has an impulse response length which can be up to three information bit periods long, as compared to the one bit period of the filter of Figure 3 with 48 stages. This provides advantages for the following reasons. The sharpness of cut-off of a filter response in the frequency domain increases in proportion to the lengths of its impulse response in the time domain. Thus, a long impulse response is desirable to obtain a sharp filtering effect in the frequency domain. Desirable impulse responses are generally several information symbols in length, e.g., 3 symbol periods. The sharpness of cut-off is determined by the number of symbols of each waveform stored in the ROM modulator depends on, while attenuation of components further away from the cut-off point depends on the filtering applied to these delta-sigma waveforms after they emerge from the ROM modulator.

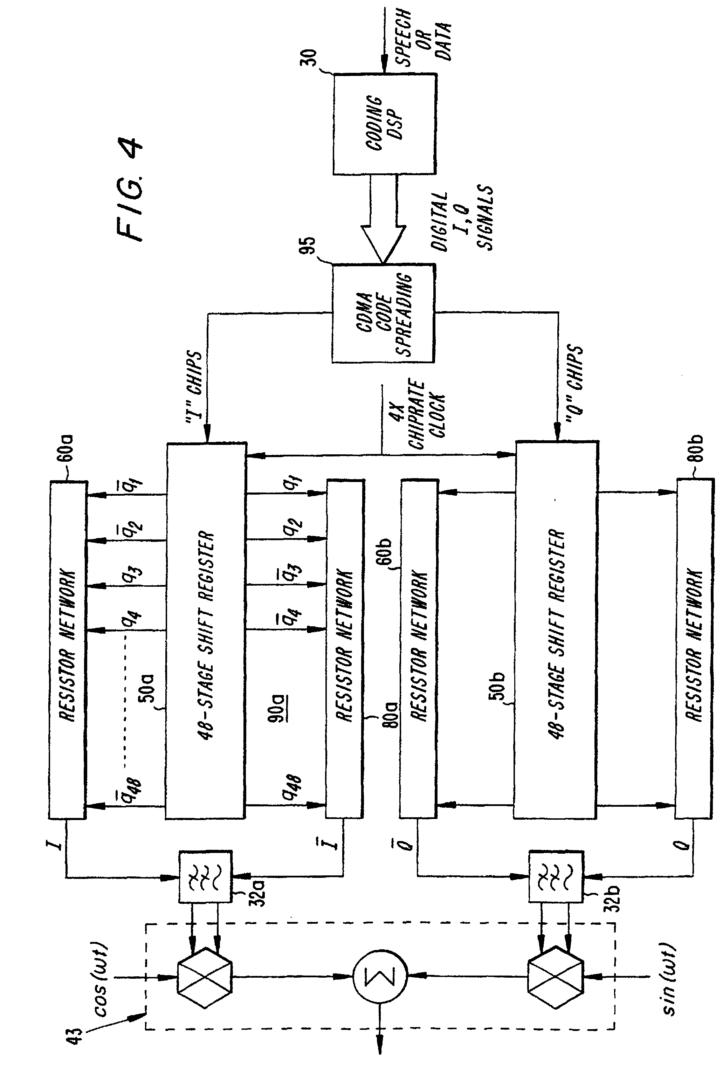

The filter of Figure 3 may also be used for generating a filtered, CDMA coded signal, as shown in Figure 4. The DSP 30 supplies convolutionally-coded and interleaved information bits to convertors 41, which are now CDMA code-spreaders 95 instead of the delta-sigma convertors. For example, if the CDMA spreading spreads each coded bit from DSP 30 by a factor of 64, the output chip rate from spreaders 95 will be 64 times the coded information rate, giving in the case of CDMA standard IS-95 a chiprate of 1.2288 Megabits/sec. This chip stream can be used as an input for the filter of Figure 3. The chip stream may be further sampled at four samples per chip to obtain a rate of 4.9152 Megabits/sec which is clocked into a shift register 50 of, for example, 48 stages. The total impulse response length of 48 1/4-chips or 12 chips is adequate to allow, by proper choice of weighting resistors $60_1$-$60_N$, good spectral containment of transmissions.

More specifically, Figure 4 illustrates the application of the present invention to a CDMA system in which the DSP 30 codes analog speech into digital form or accepts digital data signals already in digital form and applies error correction coding. The coded speech and data are then converted to I,Q signals representing the vector components of a modulated signal which are further spread-spectrum coded by the code spreading unit 95 to obtain high bitrate I and Q chipstreams. The I,Q chipstreams are clocked through shift register stages 50a, 50b at a multiple of (for example, four times) the chiprate and the inverted $\bar{q}$ or non-inverted q outputs of the shift registers are applied to resistor networks 60a, 60b with the inverse being applied to other resistor networks 80a, 80b. As a result, the first resistor networks 60a, 80a generate antiphase I-signals forming a balanced signal input to a first balanced RC filter 32a and second resistor networks 60b, 80b form balanced Q-signal outputs to a second balanced RC filter 32b. Filters 32a, 32b have only to remove unwanted spectral components above the sampling frequency (of four times the chiprate) and can be integrated RC filters, the main filter frequency response in the vicinity of the chiprate having been accurately determined by the resistor ratios within weighting networks 60a, 60b, 80a, 80b. The filtered, balanced I,Q drive signals from filters 32a, 32b are then applied to the balanced inputs of quadrature modulator 43.

Thus, it has been shown above how the inventive balanced quadrature modulator may be used advantageously to generate CDMA signals for transmission that have been accurately filtered by balanced transversal filters using resistive weights. It is well known in the prior art that the weighting values of a transversal filter should follow the coefficients of an inverse Fourier Transform of the desired frequency response. Accordingly, the resistor values $60_1$, $60_2$...$60_N$ should be inversely proportional to the Fourier transform of the desired frequency response. This is also equivalent to choosing the weighting resistor values to be inversely proportional to samples on the desired filter impulse response. Since the network is of finite length, knowledge available within the prior art may be consulted as to how best to truncate the infinite impulse response of an ideal band limiting filter to obtain modified weighting values that compensate for the truncation while continuing to provide increasing attenuation of out-of-band, unwanted spectral components of the I,Q modulating waveforms.

The invention of Figures 3 and 4 is amenable to integration in the form of a semiconductor (e.g., silicon) chip. Semiconductor chip processes have various means for forming resistors. The absolute values of such resistors are hard to control accurately, but an advantage of the invention is that only the ratios of the resistors are of prime importance, and the absolute values are of secondary importance, affecting only the power consumption of the circuit rather than the filter frequency response. To minimize power consumption, the resistors should be of high value; high value resistors may be fabricated in a CMOS process for example as long, N-type FETs that are biassed to the ON condition by connecting their gates to the positive supply. The resistor values are proportional then to the total gate length.

Other process steps such as polysilicon or diffusion steps may be used to fabricate transversal filter weighting resistors, and other modulations than those described may be reduced to the formation of suitable I,Q signals and filtered and quadrature modulated according to the invention.

**Claims**

1. A quadrature modulator for impressing a desired modulation on a radio signal, said quadrature modulator including digital signal processing means (30,95) for forming an I-signal and a Q-signal representative of a desired radio signal modulation, said I and Q signals each assuming only a single signal value or its complementary value at successive intervals of a sampling clock, **characterized in that** it further comprises:

   first (I) and second (Q) shift register means (50a,50b) for clocking said I and Q signals respectively into a chain of register stages using said sampling clock and producing from each stage a delayed I or Q output and its logical inverse complementary output;
   first weighting means (60a) connected to selected I-outputs or their complementary outputs of said first (I) shift register and a second, identical weighting means (80a) connected to the opposite outputs not selected by said first weighting means, said first and second weighting means producing first and second weighted output signals;

third weighting means (60b) connected to selected Q-outputs or their complementary outputs of said first (Q) shift register and a fourth, identical weighting means (80b) connected to the opposite outputs not selected by said third weighting means, said third and fourth weighting means producing third and fourth weighted output signals; and

quadrature modulating means (43) having inputs for receiving said first through fourth weighted output signals for impressing said desired modulation on a radio frequency carrier signal.

2. A quadrature modulator according to claim 1, further comprising:

first smoothing means (32a) for smoothing said first and second weighted output signals to produce a first smoothed, balanced signal output; and

second smoothing means (32b) for smoothing said third and fourth weighted output signals to produce a second smoothed, balanced signal output, wherein said quadrature modulating means (43) has first and second balanced inputs connected respectively to said first and second balanced signal outputs for impressing said desired modulation on a radio frequency carrier signal.

3. A code division multiple access spread-spectrum signal transmitter, said transmitter including digital signal processing means (30) for coding a speech or data signal for transmission into a digital signal, **characterized in that** it further comprises:

spread-spectrum coding means (45) for converting said digital signal to an 'I' chipstream and a 'Q' chipstream at a given chiprate, said chipstrearns comprising sequences of signal values or their complements;

first (I) and second (Q) shift register means (50a,50b) for clocking said I and Q chipstreams respectively into a chain of register stages using a sampling clock equal to said chiprate or a multiple thereof and producing from each stage a delayed I or Q output and its logical inverse complementary output;

first weighting means (60a) connected to selected I-outputs or their complementary outputs of said first (I) shift register and a second, identical weighting means (80a) connected to the opposite outputs not selected by said first weighting means, said first and second weighting means producing first and second weighted output signals;

third weighting means (60b) connected to selected Q-outputs or their complementary outputs of said first (Q) shift register and a fourth, identical weighting means (80b) connected to the opposite outputs not selected by said third weighting means, said third and fourth weighting means producing third and fourth weighted output signals; and

quadrature modulating means (43) having inputs for receiving said first through fourth weighted output signals for impressing said code division multiple access spread spectrum modulation on a radio frequency signal.

4. A code division multiple access spread spectrum signal transmitter according to claim 3, further comprising:

first smoothing means (32a) for smoothing said first and second weighted output signals to produce a first smoothed, balanced signal output; second smoothing means (32b) for smoothing said third and fourth weighted output signals to produce a second smoothed, balanced signal output, wherein said quadrature modulating means having first and second balanced inputs connected respectively to said first and second balanced signal outputs for impressing said code division multiple access spread spectrum modulation on a radio frequency signal.

5. A method of quadrature modulation for impressing a desired modulation on a radio signal, comprising the steps of forming an I-signal and a Q-signal representative of a desired radio signal modulation, said I and Q signals each assuming only a single signal value or its complementary value at successive intervals of a sampling clock, **characterized in that** it includes the further steps of:

clocking said I and Q signals respectively into a chain of register stages using said sampling clock and producing from each stage a delayed I or Q output and its logical inverse complementary output;

weighting said delayed I output and its logical inverse complementary output to produce first and second weighted output signals;

weighting said delayed Q output and its logical inverse complementary output to produce third and fourth weighted output signals; and

impressing said desired modulation on a radio frequency carrier signal in a quadrature modulating means in response to said first through fourth weighted output signals.

6. A method of quadrature modulation according to claim 5, further comprising the steps of:

smoothing said first and second weighted output signals to produce a first smoothed, balanced signal output; and
smoothing said third and fourth weighted output signals to produce a second smoothed, balanced signal output, wherein said quadrature modulating means has first and second balanced inputs connected respectively to said first and second balanced signal outputs for impressing said desired modulation on a radio frequency carrier signal.

7. A method of code division multiple access spread-spectrum signal transmission, comprising the steps of coding a speech or data signal for transmission into a digital signal; converting said digital signal to an 'I' chipstream and a 'Q' chipstream at a given chiprate, said chipstreams comprising sequences of signal values or their complements, **characterized in that** it further comprises the steps of:

clocking said I and Q chipstreams respectively into a chain of register stages using a sampling clock equal to said chiprate or a multiple thereof and producing from each stage a delayed I or Q output and its logical inverse complementary output;
weighting said delayed I output and its logical inverse complementary output to produce first and second weighted output signals;
weighting said delayed Q output and its logical inverse complementary output to produce third and fourth weighted output signals; and
impressing said code division multiple access spread spectrum modulation on a radio frequency signal in a quadrature modulating means.

8. A method of code division multiple access spread-spectrum signal transmission according to claim 7, further comprising the steps of:

smoothing said first and second weighted output signals to produce a first smoothed, balanced signal output;
smoothing said third and fourth weighted output signals to produce a second smoothed, balanced signal output, wherein said quadrature modulating means having first and second balanced inputs connected respectively to said first and second balanced signal outputs for impressing said code division multiple access spread spectrum modulation on a radio frequency signal.

**Patentansprüche**

1. Quadraturmodulator zum Einprägen einer gewünschten Modulation auf ein Funksignal, wobei der Quadraturmodulator eine Digitalsignalverarbeitungsvorrichtung (30, 95) umfasst zum Bilden eines für die gewünschte Funksignalmodulation repräsentativen I-Signals und Q-Signals, wobei das I- und Q-Signal jeweils nur einen einzelnen Signalwert annehmen oder seinen Komplementärwert in aufeinanderfolgenden Intervallen eines Abtasttaktes,
**gekennzeichnet durch:**

eine erste (I) und eine zweite (Q) Schiebregistervorrichtung (50a, 50b) zum jeweiligen Takten der I- und Q-Signale in einer Reihe von Registerstufen unter Verwendung des Abtasttaktes und zum Produzieren eines verzögerten I- oder Q-Ausgangs und ihrer logisch inversen komplementären Ausgänge aus jeder Stufe;

eine erste Gewichtungsvorrichtung (60a), die mit ausgewählten I-Ausgängen oder ihren komplementären Ausgängen des ersten (I) Schieberegisters verbunden sind und eine zweite, identische Gewichtungsvorrichtung (80a), die mit entgegengesetzten, nicht **durch** die erste Gewichtungsvorrichtung ausgewählten Ausgängen verbunden ist, wobei die erste und zweite Gewichtungsvorrichtung erste und zweite gewichtete Ausgangssignale produzieren;

eine dritte Gewichtungsvorrichtung (60b), die mit ausgewählten Q-Ausgängen oder ihren komplementären Ausgängen des ersten (Q) Schieberegisters verbunden sind und eine vierte, identische Gewichtungsvorrichtung (80b), die mit entgegengesetzten, nicht **durch** die dritte Gewichtungsvorrichtung ausgewählten Ausgängen verbunden ist, wobei die dritte und vierte Gewichtungsvorrichtung dritte und vierte gewichtete Ausgangssignale produzieren; und

eine Quadraturmodulationsvorrichtung (43) mit Eingängen zum Empfangen der ersten bis vierten gewichteten Ausgangssignale zum Einprägen der gewünschten Modulation auf ein Funkfrequenzträgersignal.

2. Quadraturmodulator nach Anspruch 1, außerdem umfassend:

eine erste Glättungsvorrichtung (32a) zum Glätten des ersten und zweiten gewichteten Ausgangssignals zum Produzieren einer ersten geglätteten symmetrischen Signalausgangsgröße; und

eine zweite Glättungsvorrichtung (32b) zum Glätten des dritten und vierten gewichteten Ausgangssignals zum Produzieren einer zweiten geglätteten symmetrischen Signalausgangsgröße,

wobei die Quadraturmodulationsvorrichtung (43) erste und zweite symmetrische Eingänge jeweils mit den ersten und zweiten symmetrischen Signalausgängen verbunden hat zum Einprägen der gewünschten Modulation auf ein Funkfrequenzträgersignal.

3. CDMA-Spreizspektrumsignalsender, wobei der Sender eine Digitalverarbeitungsvorrichtung (30) einschließt zum Codieren eines zu sendenden Sprach- oder Datensignals in ein Digitalsignal, **gekennzeichnet durch**:

eine Spreizspektrumcodiervorrichtung (45) zum Umsetzen des Digitalsignals in einen I-Chipstrom und einen Q-Chipstrom mit einer gegebenen Chiprate, wobei die Chipströme Folgen von Signalwerten oder ihrer Komplemente umfassen;

eine erste (I) und zweite (Q) Schieberegistervorrichtung (50a, 50b) zum jeweiligen Takten der I- und Q-Chipströme in einer Reihe von Registerstufen unter Verwendung eines Abtasttaktes gleich der Chiprate oder eines Mehrfachen davon und zum Produzieren der verzögerten I- oder Q-Ausgangsgröße und ihren logisch inversen komplementären Ausgangsgrößen aus jeder Stufe;

eine erste Gewichtungsvorrichtung (60a), die mit ausgewählten I-Ausgängen oder ihren komplementären Ausgängen des ersten (I) Schieberegisters verbunden sind und eine zweite, identische Gewichtungsvorrichtung (80a), die mit entgegengesetzten, nicht **durch** die erste Gewichtungsvorrichtung ausgewählten Ausgängen verbunden ist, wobei die erste und zweite Gewichtungsvorrichtung erste und zweite gewichtete Ausgangssignale produzieren;

eine dritte Gewichtungsvorrichtung (60b), die mit ausgewählten Q-Ausgängen oder ihren komplementären Ausgängen des ersten (Q) Schieberegisters verbunden sind und eine vierte, identische Gewichtungsvorrichtung (80b), die mit entgegengesetzten, nicht **durch** die dritte Gewichtungsvorrichtung ausgewählten Ausgängen verbunden ist, wobei die dritte und vierte Gewichtungsvorrichtung dritte und vierte gewichtete Ausgangssignale produzieren; und

eine Quadraturmodulationsvorrichtung (43) mit Eingängen zum Empfangen der ersten bis vierten gewichteten Ausgangssignale zum Einprägen der CDMA-Spreizspektrummodulation auf ein Funkfrequenzsignal.

4. CDMA-Spreizspektrumsignalsender nach Anspruch 3, außerdem umfassend:

eine erste Glättungsvorrichtung (32a) zum Glätten des ersten und zweiten gewichteten Ausgangssignals zum Produzieren einer ersten geglätteten symmetrischen Signalausgangsgröße; und

eine zweite Glättungsvorrichtung (32b) zum Glätten des dritten und vierten gewichteten Ausgangssignals zum Produzieren einer zweiten geglätteten symmetrischen Signalausgangsgröße,

wobei die Quadraturmodulationsvorrichtung erste und zweite symmetrische Eingänge jeweils mit den ersten und zweiten symmetrischen Signalausgängen verbunden hat zum Einprägen der CDMA-Spreizspektrummodulation auf ein Funkfrequenzsignal.

5. Quadraturmodulationsverfahren zum Einprägen einer gewünschten Modulation auf ein Funksignal, mit den Schritten des Bildens eines für eine gewünschte Funksignalmodulation repräsentativen I-Signals und eines Q-Signals, wobei das I- und Q-Signal jeweils nur einen einzelnen Signalwert annehmen oder seinen Komplementärwert zu aufeinanderfolgenden Intervallen eines Abtasttaktes, **gekennzeichnet durch** die weiteren Schritte:

jeweiliges Takten der I- und Q-Signale in eine Reihe von Registerstufen unter Verwendung des Abtasttaktes und Produzieren einer verzögerten I- oder Q-Ausgangsgröße und ihrer logisch inversen Komplementärausgangsgröße aus jeder Stufe;

Gewichten der verzögerten I-Ausgangsgröße und ihrer logisch inversen Komplementärausgangsgröße zum Produzieren erster und zweiter gewichteter Ausgangssignale;

Gewichten der verzögerten Q- Ausgangsgröße und ihrer logisch inversen Komplementärausgangsgröße zum Produzieren dritter und vierter gewichteter Ausgangssignale; und

Einprägen der gewünschten Modulation auf ein Funkfrequenzträgersignal in einer Quadraturmodulationsvorrichtung ansprechend auf die ersten bis vierten gewichteten Ausgangssignale.

6. Verfahren der Quadraturmodulation nach Anspruch 5, außerdem die Schritte umfassend:

Glätten des ersten und zweiten gewichteten Ausgangssignals zum Produzieren einer ersten geglätteten symmetrischen Signalausgangsgröße; und

Glätten des dritten und vierten gewichteten Ausgangssignals zum Produzieren einer zweiten geglätteten symmetrischen Signalausgangsgröße,

wobei die Quadraturmodulationsvorrichtung erste und zweite symmetrische Eingänge jeweils mit den ersten und zweiten symmetrischen Signalausgängen verbunden hat zum Einprägen der gewünschten Modulation auf ein Funkfrequenzträgersignal.

7. Verfahren zum Senden eines CDMA-Spreizspektrumsignals, einschließlich der Schritte zum Codieren eines zu sendenden Sprach- oder Datensignals in ein Digitalsignal, Verarbeitung des Digitalsignals in einen I-Chipstrom oder einen Q-Chipstrom mit einer gegebenen Chiprate, wobei die Chipströme Folgen von Signalwerten oder ihrer Komponente einschließen, **gekennzeichnet durch**:

jeweiliges Takten der I- und Q-Chipströme in einer Reihe von Registerstufen unter Verwendung eines Abtasttaktes gleich der Chiprate oder eines Mehrfachen davon und zum Produzieren der verzögerten I- oder Q-Ausgangsgröße und ihren logisch inversen komplementären Ausgangsgrößen aus jeder Stufe;

Gewichten der verzögerten I-Ausgangsgröße und ihrer logisch inversen Komplementärausgangsgröße zum Produzieren erster und zweiter gewichteter Ausgangssignale;

Gewichten der verzögerten Q- Ausgangsgröße und ihrer logisch inversen Komplementärausgangsgröße zum Produzieren dritter und vierter gewichteter Ausgangssignale; und

Einprägen der CDMA-Spreizspektrummodulation auf ein Funkfrequenzsignal in einer Quadraturmodulationsvorrichtung.

8. Verfahren zum Senden eines CDMA-Spreizspektrumsignals nach Anspruch 7, außerdem die Schritte umfassend:

Glätten des ersten und zweiten gewichteten Ausgangssignals zum Produzieren einer ersten geglätteten symmetrischen Signalausgangsgröße; und

Glätten des dritten und vierten gewichteten Ausgangssignals zum Produzieren einer zweiten geglätteten symmetrischen Signalausgangsgröße,

wobei die Quadraturmodulationsvorrichtung erste und zweite symmetrische Eingänge jeweils mit den ersten und zweiten symmetrischen Signalausgängen verbunden hat zum Einprägen der CDMA-Spreizspektrummodulation auf ein Funkfrequenzsignal.

**Revendications**

1. Modulateur de quadrature pour appliquer une modulation désirée à un signal de radio, ledit modulateur de quadrature comprenant des moyens (30, 95) de traitement de signaux numériques pour former un signal I et un signal Q représentatifs d'une modulation de signal de radio désirée, lesdits signaux I et Q présentant chacun uniquement une valeur de signal unique ou sa valeur complémentaire à intervalles successifs d'une horloge d'échantillonnage, **caractérisé en ce qu'**il comprend de plus :

des premier (I) et deuxième (Q) moyens (50a, 50b) formant registre à décalage pour cadencer lesdits signaux I et Q, respectivement, sous la forme d'une chaîne d'étages de registre à l'aide de ladite horloge d'échantillonnage et produire à partir de chaque étage une sortie I ou Q retardée et sa sortie complémentaire logique inverse ;
un premier moyen de pondération (60a) connecté aux sorties I sélectionnées ou à leurs sorties complémentaires dudit premier (I) registre à décalage et un deuxième moyen de pondération (80a) identique connecté aux sorties opposées non sélectionnées par ledit premier moyen de pondération, lesdits premier et deuxième moyens de pondération produisant des premier et deuxième signaux de sortie pondérés ;
un troisième moyen de pondération (60b) connecté à des sorties Q sélectionnées ou à leurs sorties complémentaires dudit premier (Q) registre à décalage et un quatrième moyen de pondération (80b) identique connecté aux sorties opposées non sélectionnées par ledit troisième moyen de pondération, lesdits troisième et quatrième moyens de pondération produisant des troisième et quatrième signaux de sortie pondérés ; et

un moyen de modulation de quadrature (43) comportant des entrées pour recevoir lesdits premier à quatrième signaux de sortie pondérés pour appliquer ladite modulation désirée à un signal de porteuse à fréquence radio.

2. Modulateur de quadrature selon la revendication 1, comprenant de plus :

   un premier moyen de lissage (32a) pour lisser lesdits premier et deuxième signaux de sortie pondérés afin de produire une première sortie de signaux équilibrés lissés ; et
   un deuxième moyen de lissage (32b) pour lisser lesdits troisième et quatrième signaux de sortie pondérés afin de produire une deuxième sortie de signaux équilibrés lissés, dans lequel ledit moyen de modulation de quadrature (43) comportent des première et deuxième entrées équilibrées connectées respectivement auxdites première et deuxième sorties de signaux équilibrés pour appliquer ladite modulation désirée à un signal de porteuse à fréquence radio.

3. Emetteur de signal à spectre étalé à accès multiple à division de code, ledit émetteur comprenant un moyen (30) de traitement du signal numérique pour coder un signal vocal ou de données pour l'émission sous la forme d'un signal numérique, **caractérisé en ce qu'**il comprend de plus :

   de moyen (45) de codage à étalement du spectre pour convertir ledit signal numérique en un train d'impulsions "I" et un train d'impulsions "Q" à une fréquence d'impulsions donnée, lesdits trains d'impulsions comprenant des séquences de valeurs de signal ou leurs compléments ;
   des premier (I) et deuxième (Q) moyens (50a, 50b) formant registre à décalage pour cadencer lesdits trains d'impulsions I et Q, respectivement, sous la forme d'une chaîne d'étages de registre à l'aide d'une horloge d'échantillonnage égale à ladite fréquence d'impulsions ou à un multiple de celle-ci, et produire à partir de chaque étage une sortie I ou Q retardée et sa sortie complémentaire logique inverse ;
   un premier moyen de pondération (60a) connecté à des sorties I sélectionnées ou à leurs sorties complémentaires dudit premier (I) registre à décalage, et un deuxième moyen de pondération (80a) identique connecté aux sorties opposées non sélectionnées par ledit premier moyen de pondération, lesdits premier et deuxième moyens de pondération produisant des premier et deuxième signaux de sortie pondérés ;

un troisième moyen de pondération (60b) connecté à des sorties Q sélectionnées ou à leurs sorties complémentaires dudit deuxième (Q) registre à décalage et un quatrième moyen de pondération (80b) identique connecté aux sorties opposées non sélectionnées par ledit troisième moyen de pondération, lesdits troisième et quatrième moyens de pondération produisant des troisième et quatrième signaux de sortie pondérés ; et

un moyen de modulation de quadrature (43) comportant des entrées pour recevoir lesdits premier à quatrième signaux de sortie pondérés pour appliquer ladite modulation à spectre étalé à accès multiple à division de code à un signal à fréquence radio.

4. Emetteur de signal à spectre étalé à accès multiple à division de code selon la revendication 3, comprenant de plus :

   un premier moyen de lissage (32a) pour lisser lesdits premier et deuxième signaux de sortie pondérés afin de produire une première sortie de signaux équilibrés lissés ;
   un deuxième moyen de lissage (32b) pour lisser lesdits troisième et quatrième signaux de sortie pondérés afin de produire une deuxième sortie de signaux équilibrés lissés, dans lequel ledit moyen de modulation de quadrature comporte des première et deuxième entrées équilibrées connectées respectivement auxdites première et deuxième sorties de signaux équilibrés pour appliquer ladite modulation à spectre étalé à accès multiple à division de code à un signal à fréquence radio.

5. Procédé de modulation de quadrature pour appliquer une modulation désirée à un signal de radio, comprenant les étapes consistant à former un signal I et un signal Q représentatifs d'une modulation de signal de radio désirée, lesdits signaux I et Q prenant chacun uniquement une valeur de signal unique ou sa valeur complémentaire à des intervalles successifs d'une horloge d'échantillonnage, **caractérisé en ce qu'**il comprend les étapes supplémentaires consistant à :

   cadencer lesdits signaux I et Q, respectivement, sous la forme d'une chaîne d'étages de registre à l'aide de ladite horloge d'échantillonnage et produire à partir de chaque étage une sortie I ou Q retardée et sa sortie complémentaire logique inverse ;

pondérer ladite sortie I retardée et sa sortie complémentaire logique inverse afin de produire des premier et deuxième signaux de sortie pondérés ;

pondérer ladite sortie Q retardée et sa sortie complémentaire logique inverse afin de produire des troisième et quatrième signaux de sortie pondérés ; et

appliquer ladite modulation désirée à un signal de porteuse à fréquence radio dans un moyen de modulation de quadrature en réponse auxdits premier à quatrième signaux de sortie pondérés.

6. Procédé de modulation de quadrature selon la revendication 5, comprenant de plus les étapes consistant à :

lisser lesdits premier et deuxième signaux de sortie pondérés afin de produire une première sortie de signaux équilibrés lissés ; et

lisser lesdits troisième et quatrième signaux de sortie pondérés afin de produire une deuxième sortie de signaux équilibrés lissés, dans lequel ledit moyen de modulation de quadrature comporte des première et deuxième entrées équilibrées connectées respectivement auxdites première et deuxième sorties de signaux équilibrés pour appliquer ladite modulation désirée à un signal de porteuse à fréquence radio.

7. Procédé d'émission de signal à spectre étalé à accès multiple à division de code, comprenant les étapes consistant à coder un signal vocal ou de données pour l'émission sous la forme d'un signal numérique ; convertir ledit signal numérique en un train d'impulsions (I) et un train d'impulsions (Q) à une fréquence d'impulsions donnée, lesdits trains d'impulsions comprenant des séquences de valeurs de signal ou leurs complémentaires, **caractérisé en ce qu'**il comprend de plus les étapes consistant à :

cadencer lesdits trains d'impulsions I et Q, respectivement, sous la forme d'une chaîne d'étages de registre à l'aide d'une horloge d'échantillonnage égale à ladite fréquence d'impulsions ou à un multiple de celle-ci., et produire à partir de chaque étage une sortie I ou Q retardée et sa sortie complémentaire logique inverse ;

pondérer ladite sortie I retardée et sa sortie complémentaire logique inverse afin de produire des premier et deuxième signaux de sortie pondérés ;

pondérer ladite sortie Q retardée et sa sortie complémentaire logique inverse afin de produire des troisième et quatrième signaux de sortie pondérés ; et

appliquer ladite modulation à spectre étalé à accès multiple à division de code à un signal à fréquence radio dans un moyen de modulation de quadrature.

8. Procédé d'émission de signal à spectre étalé à accès multiple à division de code selon la revendication 7, comprenant de plus les étapes consistant à :

lisser lesdits premier et deuxième signaux de sortie pondérés afin de produire une première sortie de signaux équilibrés lissés ;

lisser lesdits troisième et quatrième signaux de sortie pondérés afin de produire une deuxième sortie de signaux équilibrés lissés, dans lequel lesdits moyens de modulation de quadrature comportent des première et deuxième entrées équilibrées connectées respectivement auxdites première et deuxième sorties de signaux équilibrés pour appliquer ladite modulation à spectre étalé à accès multiple à division de code à un signal à fréquence radio.

FIG. 1
PRIOR ART

FIG. 2

FIG. 3

FIG. 4